# EUROPÄISCHE PATENTSCHRIFT

(11) **EP 1 799 429 B1**
(45) Veröffentlichungstag und Bekanntmachung des Hinweises auf die Patenterteilung: **18.02.2009**
(21) Anmeldenummer: 05778902.6
(22) Anmeldetag: 31.08.2005
(51) Int. Cl.: B29C 51/26, B29C 51/32

(54) **PRESSVERFORM-WERKZEUG SOWIE VERFAHREN ZUR HERSTELLUNG EINES BAUTEILS DURCH PRESSVERFORMUNG**
PRESS MOULDING TOOL AND METHOD FOR PRODUCTION OF A COMPONENT BY PRESS MOULDING
OUTIL DE MOULAGE PAR PRESSION ET PROCEDE POUR FABRIQUER UNE PIECE PAR MOULAGE PAR PRESSION

(30) Priorität: 18.09.2004 DE 102004045398; 18.09.2004 DE 102004045400; 18.09.2004 DE 102004045399
(43) Veröffentlichungstag der Anmeldung: 27.06.2007
(73) Patentinhaber: Faurecia Innenraum Systeme GmbH, 76767 Hagenbach (DE)
(72) Erfinder: SCHILLES, Wilfried, 539 09 Zülpich Schwerfen (DE)
(74) Vertreter: Schatt, Markus F.
(86) Internationale Anmeldenummer: PCT/DE2005/001524
(87) Internationale Veröffentlichungsnummer: WO 2006/029589

(56) Entgegenhaltungen:
- EP-A- 1 211 051
- WO-A-99/64221
- DE-A1- 2 925 500
- US-A- 5 413 661
- US-A- 6 136 415
- PATENT ABSTRACTS OF JAPAN Bd. 012, Nr. 466 (M-772), 7. Dezember 1988 (1988-12-07) -& JP 63 191615 A (MEIWA SANGYO KK), 9. August 1988 (1988-08-09) -& DATABASE WPI Week 198837 Derwent Publications Ltd., London, GB; AN 1988-261778 XP002361731 & JP 63 191615 A 9. August 1988 (1988-08-09)

## Beschreibung

Die Erfindung betrifft ein Pressverform-Werkzeug sowie ein Verfahren zur Herstellung eines Bauteils durch Pressverformung.

Zur Herstellung derartiger Bauteile ist aus dem Stand der Technik bekannt, ein Oberwerkzeug und ein Unterwerkzeug zu verwenden, um eine Träger-Schicht und eine Dekorations-Schicht durch Zusammenpressen in eine vorbestimmte Bauteilform zu verformen und miteinander zu verbinden. Bei der Verformung der Schichten in eine Bauteil-Form mit einer dreidimensionalen Verwölbung oder Kontur, besteht das Problem, dass die Materialien dazu neigen, Falten zu werfen, wenn das Oberwerkzeug und das Unterwerkzeug zusammengefahren werden. Diese Falten werden dann dauerhaft in die Materialien eingepresst und führen zur Unbrauchbarkeit des hergestellten Bauteils. Aus diesem Grund wird ein Spannrahmen verwendet, mit der das Dekomaterial oder die Matte eingeklemmt und einer vorbestimmten Weise gehalten wird, um eine Bildung von Faltenwurf am Bauteil im Bereich zwischen dem Unterwerkzeug und dem Oberwerkzeug zu verhindern. Solche Pressverform-Werkzeuge sind aus EP 1 211 051 A2 und US 6 136 415 bekannt.

Aus der DE 29 25 500 A1 ist eine weitere Presse zur Herstellung von kaschierten flächigen Formteilen aus einer vorzugsweise thermoplastischen Trägerschicht und einer flexiblen Kaschierschicht bekannt. Die Presse weist zwei zueinander bewegliche Profilpressplatten auf, von denen eine mit einer Abscherkante zur Bildung einer ersten Schneideinrichtung versehen ist, die mit einem ringartigen Element als Gegenlage zusamenwirkt. Die Presse weist eine zweite Schneideinrichtung auf, die von einem mit der anderen Profilpressplatte verbundenen Messer und einer Fläche des ringartigen Elementes gebildet wird. Die beiden Schneideinrichtungen sind in einer Ebene quer zur gemeinsamen Schneidrichtung voneinander beabstandet. Durch diese Anordnung werden die Trägerschicht und die Kaschierschicht beim Zusammenfahren der Presse geklemmt und geschnitten, so dass Spannungen in den Schichten innerhalb des Verformbereiches auftreten. Dadurch wird die Bauteil-Qualität negativ beeinflusst.

Die Aufgabe der Erfindung ist, ein Pressverform-Werkzeug sowie ein Verfahren zur Herstellung eines Bauteils durch Pressverformung bereitzustellen, mit dem ein Beschnitt der in die Herstellungs-Vorrichtung eingelegten Schichten erreicht wird, bei der eine hohe Bauteil-Qualität erreichbar ist.

Diese Aufgabe wird durch die Merkmale der unabhängigen Patentansprüche gelöst. Weitere erfindungsgemäße Ausführungsformen sind in den auf diese rückbezogenen Unteransprüchen beschrieben.

Erfindungsgemäß ist Pressverform-Werkzeug zur Herstellung eines Bauteils aus zumindest einer ersten Material-Schicht und einer zweiten Material-Schicht mit zumindest einem ersten Werkzeugteil und einem zweiten Werkzeugteil mit jeweils einer dreidimensionalen Verformungskontur vorgesehen, wobei bei einem Einlegen der ersten Material-Schicht und der zweiten Material-Schicht in die Vorrichtung die Verformungskontur des ersten Werkzeugteils der ersten Material-Schicht und die Verformungskontur des zweiten Werkzeugteils der zweiten Material-Schicht zugewandt ist, wobei die Werkzeugteile in einem Druck-Geber eingespannt sind, um die Verformung der ersten Material-Schicht und der zweiten Material-Schicht sowie die Verbindung der beiden Material-Schichten miteinander durch das Zusammenfahren des ersten und des zweiten Werkzeugteils zu bewirken, sowie mit einer Spannrahmen-Einrichtung, um die Material-Schichten während des Verformungsvorganges außerhalb des Konturbereichs des Werkzeugs in ihrer Schließ-Stellung zu halten,
- wobei die Spannrahmen-Einrichtung ein erstes Spannrahmen-Element, das mittels einer ersten Stell-Einrichtung relativ zum ersten Werkzeugteil beweglich ist, und ein zweites Spannrahmen-Element, das mittels einer zweiten Steil-Einrichtung relativ zum zweiten Werkzeugteil beweglich ist, umfasst, wobei die Spannrahmen-Elemente zum Halten der zumindest zwei Material-Schichten angeordnet sind und wobei zumindest an einem der Spannrahmen-Elemente mindestens ein Distanz-Element zur Beabstandung der Spannrahmen-Elemente in der Schließ-Stellung derselben angeordnet ist, so dass in der Schließ-Stellung der Spannrahmen-Elemente und bei einem mittels der Werkzeugteile ausgeübten Press-Vorgang ein Nachfliessen zumindest eines der eingelegten Material-Schichten zugelassen ist, und
- wobei das Pressverform-Werkzeug eine Schneid-Einrichtung mit einem in der in der Öffnungs- und Schließ-Richtung gesehen segmentweise am Umfang der die Werkzeugteile verlaufenden oder diese vollständig umlaufenden Messer zum Abschneiden eines bei der Pressverformung neben dem ersten und dem zweiten Werkzeugteil vorhandenen Überstandes der Material-Schichten umfasst, das relativ zum ersten oder zweiten Spannrahmen-Element beweglich ist.

Auch bei einem vollständig umlaufenden Messer kann das Messer in Umlaufrichtung segmentweise aufgeteilt sein.

Das zumindest eine Distanz-Element kann einstellbar ausgeführt sein, wobei die Einstellung zumindest eines Distanz-Elements mechanisch oder über eine Steuerungs-Einrichtung erfolgen kann.

An jedem der Spannrahmen-Elemente kann jeweils ein Distanz-Element angeordnet sein, die in der Schließ-Stellung gegenseitig zur Anlage kommen.

Die Schneid-Bewegung des Messers der Schneid-Einrichtung kann parallel oder quer zur Stellbewegung der Werkzeugteile verlaufen.

Das Messer der Schneid-Einrichtung kann mittels einer Heiz-Einrichtung beheizbar sein. Die Heiz-Einrichtung des Messers kann eine Aufnahme für zumindest eine in diese einsetzbare Heizpatrone aufweisen. Alternativ kann die Heiz-Einrichtung des Messers eine elektrische Widerstands-Heizung aufweisen.

Die Schneid-Einrichtung kann derart ausgeführt sein, dass in der Schließ-Stellung der Spannrahmen-Elemente das Messer derart positionierbar ist, dass dieses in seiner Ausgangsstellung die in den Spannrahmen eingelegten Material-Schichten nicht berührt.

Die Beweglichkeit des Messers kann durch einen elektrischen, hydraulischen oder pneumatischen Antrieb oder duch eine durch eine manuelle Betätigungs-Einrichtung bewerkstelligt sein.

Das Messer kann derart eingeordnet sein, dass dieses in seiner Schneid-Stellung das erste Spannrahmen-Element zumindest teilweise durchragt.

Weiterhin ist erfindungsgemäß ein Verfahren zur Herstellung eines Bauteils durch Press-Verformung einer ersten und einer zweiten Material-Schicht vorgesehen, bei der eine Verbindung der beiden Schichten innerhalb der Verformungskonturen zweier Werkzeugteile durch deren Zusammenfahren erfolgt, wobei in einer Ausgangsstellung das erste und das zweite Werkzeugteil auseinander gefahren ist. Dabei werden folgende Schritte vorgesehen:
(a) aus der Ausgangsstellung Fahren des ersten Spannrahmen-Elements und des zweiten Spannrahmen-Elements in eine zueinander ausgefahrene Stellung und Einlegen der zumindest zwei Material-Schichten zwischen die beiden Werkzeugteile, wobei das erste und das zweite Spannrahmen-Element außerhalb der Verformungskonturen der Werkzeugteile angeordnet ist,
(b) Zusammenfahren des ersten und des zweiten Spannrahmen-Elements in eine Stellung, bis diese von zumindest einem an zumindest einem der Spannrahmen-Elemente angeordneten Distanz-Element beabstandet werden, so dass die erste und die zweite Material-Schicht durch das erste und das zweite Spannrahmen-Element bei einem vorbestimmten Abstand der einander zugewandten Flächen der Spannrahmen-Elemente gehalten werden,
(c) Zusammenfahren der Werkzeugteile relativ zueinander und Durchführung der Pressverformung im Bereich der Verformungskonturen der Werkzeugteile,
(d) Abschneiden eines zwischen dem ersten und dem zweiten Werkzeugteil vorhandenen Überstands zumindest einer der beiden Material-Schichten mittels eines Messers einer Schneid-Einrichtung, wobei das Messer beim Schneid-Vorgang derart bewegt wird, dass ein entsprechender Bereich des der Schneid-Kante des Messers zugewandten Anlagebereichs des zweiten Spannrahmen-Elements oder eines der Werkzeugteile als Gegenlage für die Schneid-Kante beim Schneiden wirkt.
(e) Auseinanderfahren der Werkzeugteile und der Spannrahmen-Elemente, um die miteinander pressverformten und verbundenen Material-Schichten dem Werkzeug entnehmen zu können.

Im folgenden wird die Erfindung anhand der beiliegenden Figuren beschrieben, die zeigen:
- Figur 1 eine erste Ausführungsform des erfindungsgemäßen Pressverform-Werkzeugs mit einer Schneid-Einrichtung in einer Schließ-Stellung, in der sich das Pressverform-Werkzeug in einer geschlossenen Stellung befindet und ein erstes und ein zweites Spannrahmen-Element zusammen gefahren ist;
- Figur 2 eine alternative Ausführungsform des erfindungsgemäßen Pressverform-Werkzeugs mit einer alternativen Schneid-Einrichtung in einer geschlossenen Stellung.

Das erfindungsgemäße Pressverform-Werkzeug bzw. das Verfahren zur Herstellung eines Bauteils durch Pressverformung betrifft die Herstellung eines Bauteils aus zumindest einer ersten 1 und zumindest einer zweiten 2 Material-Schicht. Die Schichten können z.B. eine Dekorations-Schicht und eine Träger-Schicht sein. Mit dem Werkzeug bzw. dem Verfahren erfolgt eine Verformung der ersten und der zweiten Schicht sowie die Verbindung der beiden Schichten miteinander durch das Zusammenfahren eines ersten, der ersten Material-Schicht zugewandten Werkzeugteils und eines zweiten, der zweiten Material-Schicht zugewandten Werkzeugteils des Pressverform-Werkzeugs erfolgt. Generell können beide Schichten mehrschichtig sein, wobei auch mehrere Schichten der ersten oder der zweiten Schicht mit dem Verfahren bzw. der Vorrichtung nach der Erfindung verformt und miteinander verbunden werden können. In der nachfolgenden Beschreibung wird eine zur Anlage an den konturgebenden Bereich des ersten Werkzeugteils bestimmte ein- oder mehrschichtige Material-Schicht als erste Material-Schicht bezeichnet. Analog wird eine zur Anlage an den konturgebenden Bereich des zweiten Werkzeugteils bestimmte ein- oder mehrschichtige Material-Schicht nachfolgend als zweite Material-Schicht bezeichnet. Generell sind die erste und die zweite Material-Schicht Schichten, die sich unter Druck miteinander verbinden, z.B. zumindest bereichsweise verschmelzen oder verkrallen lassen.

Vorzugsweise ist eine der beiden Material-Schichten im herzustellenden Bauteil eine Dekorations-Schicht und die andere der beiden Schichten eine Träger-Schicht. Nachfolgend werden Ausführungsformen der Erfindung beschrieben, bei denen die erste Material-Schicht eine Dekorations-Schicht und die zweite Material-Schicht eine Träger-Schicht ist. Es ist jedoch auch möglich, dass umgekehrt die erste Material-Schicht eine Träger-Schicht und die zweite Material-Schicht eine Dekorations-Schicht ist. Auch muß nicht eine der beiden Schichten eine Dekorations-Schicht oder Träger-Schicht sein. Beispielsweise kann es sich bei der ersten und der zweiten Schicht um zwei Träger-Schichten oder zwei Zwischen-Schichten oder eine Träger-Schicht und eine Verstärkungs-Schicht, wie z.B. eine Schicht aus Glasfaser-Gewebe handeln.

Bei der Herstellung des Bauteils mit einer Träger-Schicht und einer Dekorations-Schicht müssen die einander zugewandten Seiten der Dekorations-Schicht und der Träger-Schicht miteinander durch von dem Werkzeug ausgeübten Druck und gegebenenfalls unter Anwendung von Wärme miteinander verbindbar sein. Dazu kann die der Träger-Schicht zugewandte Material-Schicht der Dekorations-Schicht die Eigenschaft aufweisen, sich mit der Träger-Schicht unter Druck mechanisch zu verbinden, z.B. durch mechanische Verkrallung von an der genannten Seite der Dekorations-Schicht angebrachten Fäden oder Haaren mit der gegebenenfalls angeschmolzenen Oberfläche der Träger-Schicht. Dazu kann zumindest die der Träger-Schicht zugewandte Oberfläche der Dekorations-Schicht aus einem Gewebe gebildet sein, das z.B. ein Vlies, ein Filz, ein Flachgewebe, ein Rundstrick, sein kann. Eine Verbindung von Dekorations-Schicht mit der Träger-Schicht kann auch durch Verschmelzen der einander zugewandten Oberflächen unter Anwendung von Druck durch das Werkzeug und gegebenenfalls unter Anwendung von Wärme erfolgen. Ein Verschmelzen wird erreicht, wenn die Dekorations-Schicht Schaum-Bestandteile enthält, die zur gleichen Material-Familie gehören wie die zur Verschmelzung vorgesehene Trägerschicht.

Als Dekorations-Schicht kann dabei ein textiles Gewebe, ein Schaum-Kunstleder, eine Kunststoff-Folie oder ein Leder verwendet werden. Bei der Verwendung eines textilen Gewebes als Dekorations-Schicht kann für das Ausgangsmaterial eine Schicht aus textilen Materialien oder Folien oder eine Kombination aus beiden oder eine Kombination der genannten Alternativen verwendet werden. Eine Dekorations-Schicht kann bei dem herzustellenden Bauteil auch dazu vorgesehen sein, die Haptik-Eigenschaften des Endprodukts auf der entsprechenden Seite des Bauteils zu optimieren. Dazu kann die Dekorations-Schicht auch Schaum-Bestandteile aufweisen. Beispielsweise kann die Dekorations-Schicht ein Verbund aus textilen Materialien, einem Schaum und einem Vlies-Material sein. Als Schaum kann ein PP-Schaum oder PE-Schaum oder ein auf PU aufbauender Schaum verwendet werden.

Als Träger-Schicht ist insbesondere ein Kunststoff und speziell eine Polypropylen (PP)-gebundene Fasermatte vorgesehen. Diese kann insbesondere durch Wärmezfuhr plastifizierbar sein. Die Träger-Schicht ist vorzugsweise aus einem Fasermaterial, vorzugsweise aus Naturfasern oder Glasfasern sowie aus Kunststoff-Fasern und insbesondere Polypropylen (PP)-Fasern gebildet. Die Naturfasern können aus Flachs oder Kenaf, Sisal, Leinen oder Baumwolle gebildet sein. In diesem Fall werden diese Fasern in einem vorbereitenden oder einem dem Verfahren vorangehenden Schritt zu einer Matte geformt. Anschließend werden unter Anwendung von Druck und Temperatur unter Aufschmelzung des Kunststoff-Anteiles ein miteinander verbundenes plastisches Matten-Material als eine erste oder zweite Schicht gebildet.

Nachfolgend wird die Erfindung an Hand einer Ausführungsform eines Pressverform-Werkzeugs mit einer Schneid-Einrichtung bzw. eines Verfahrens zur Herstellung eines Bauteils durch Pressverformung und mit einem Schneid-Vorgang beschrieben, auf die die erfindungsgemäße Schneid-Vorrichtung anwendbar ist.
Das erfindungsgemäße Pressverform-Werkzeug zur Herstellung eines Bauteils aus zumindest einer ersten Material-Schicht 1, in der beschriebenen Ausführungsform eine Dekorations-Schicht, und einer zweiten Material-Schicht 2, in der beschriebenen Ausführungsform eine Träger-Schicht, ist ein die Kontur des aus den Material-Schichten herzustellenden Bauteils bestimmendes Formwerkzeug 10 mit zumindest einem ersten, der ersten Schicht zugewandten Werkzeugteil 11 mit einer dreidimensionalen Verformungskontur 13 und einem zweiten, der zweiten Schicht zugewandten Werkzeugteil 12 mit einer dreidimensionalen Verformungskontur 14 auf. Die Werkzeugteile 11, 12 werden von einem Druck-Geber (nicht dargestellt) zueinander bewegt, um die Verformung der ersten Material-Schicht 1 bzw. der Dekorations-Schicht und der zweiten Material-Schicht 2 bzw. der Träger-Schicht sowie die Verbindung der beiden Material-Schichten 1, 2 miteinander durch das Zusammenfahren des ersten und des zweiten Werkzeugteils 11 bzw. 12 zu bewirken. Das erste Werkzeugteil 11 kann an einem ersten Werkzeughalter oder einer Montageplatte und zweite Werkzeugteil 12 kann an einem zweiten Werkzeughalter oder einer Montageplatte angebracht sein.

Das erfindungsgemäße Pressverform-Werkzeug weist weiterhin eine Spannrahmen-Einrichtung 22, 23 mit zueinander und gegenüber den Werkzeugteilen 11, 12 beweglichen Spannrahmen-Elementen auf, um die Material-Schichten 1, 2 während des Verformungsvorganges außerhalb des Konturbereichs des Werkzeugs in vorbestimmter Weise zu halten. Diese umfasst ein erstes Spannrahmen-Element 22, das mittels einer ersten Stell-Einrichtung 31 relativ zum ersten Werkzeugteil 11 beweglich ist, und ein zweites Spannrahmen-Element 23, das mittels einer zweiten Stell-Einrichtung 32 relativ zum zweiten Werkzeugteil 12 beweglich ist. Die Beweglichkeit der Spannrahmen bezieht sich zumindest auf die Beweglichkeit in Richtung der Öffnungs- und Schließ-Bewegung der Werkzeugteile 11, 12. Die Spannrahmen-Elemente 22 und 23 werden in ihrer Bewegungsrichtung über die Stell-Einrichtungen 31, 32 und/oder über separate Führungen geführt.

Die erste und zweite Stell-Einrichtung 31 bzw. 32 sind Einrichtungen, die von einer Steuerungs-Einrichtung zur automatischen oder gegebenenfalls zusätzlich über eine Betätigungs-Einrichtung zur manuellen oder halb-automatischen Steuerung des Herstellungs-Prozesses angesteuert werden, um die jeweiligen Spannrahmen-Elemente 22, 23 zu bewegen. Die zweite Stell-Einrichtung 32 ist vorzugsweise mit dem zweiten Werkzeugteil 12 mechanisch gekoppelt, z.B. indem diese auf einem zweiten Werkzeughalter oder einer zweiten Montageptatte angebracht ist. Die zweite Stell-Einrichtung 32 kann jedoch auch auf einem von der Position des zweiten Werkzeugteils 12 unabhängigen Träger (nicht gezeigt) angeordnet sein, so dass in diesem Fall deren Ausfahrstellung unabhängig von der Position des zweiten Werkzeugteils 12 ist.

Die Spannrahmen-Elemente 22, 23 sind jeweils außerhalb der konturgebenden Bereiche der Werkzeugteile 11, 12 angeordnet. Diese können einteilig gebildet sein und als die Werkzeugteile 11, 12 umlaufende Gebilde gestaltet sein. Die Spannrahmen-Elemente können auch entlang des Umfangs oder entlang eines Bereichs des Umfangs der Werkzeugteile 11, 12 mehrteilig und als die Werkzeugteile 11, 12 bereichsweise umlaufend gebildet sein. Auch kann ein Spannrahmen-Element aus zwei Teilen gebildet sein, die an Stellen außerhalb der Werkzeugteile 11, 12 angeordnet sind. Diese Stellen können insbesondere einander diametral gegenüber liegen. Auch können mehrere, z.B. drei oder vier Teile eines Spannrahmen-Elements außerhalb des Umfangs des jeweiligen Werkzeugteils 11 bzw. 12 oder der Werkzeugteile 11, 12 je nach Anwendungsfall regelmäßig oder unregelmäßig um diesen herum verteilt, angeordnet sein.

Die Spannrahmen-Elemente können unterschiedlich gebildet sein. Die Bauweise und Anordnung der Spannrahmen-Elemente richtet sich nach Art, Material und Gestalt des herzustellenen Bauteils bzw. nach Art, Material und Gestalt der Materialien. Die Spannrahmen-Elemente weisen jeweils einen Anlagebereich oder zwei Anlagebereiche auf, der bzw. die bei der Herstellung des Bauteils dazu vorgesehen ist bzw. sind, dass ein Überstand-Bereich der ersten bzw. zweiten Schicht an diesen bzw. diese anlegbar ist. Das erste Spannrahmen-Element 22 und das zweite Spannrahmen-Element 23 weisen jeweils einen Anlagebereich auf. Der Anlagebereich 22a des ersten Spannrahmen-Elements 22 ist einem ersten Anlagebereich 23a des zweiten Spannrahmen-Elements 23 zugewandt. Diese Anlagebereiche sind jeweils derart gestaltet, dass ein Aufnehmen eines Überstandbereichs der ersten und zweiten Material-Schicht 1 bzw. 2 bei einem entsprechenden Zusammenfahren der Spannrahmen-Elemente möglich ist. Das Aufnehmen kann ein Klemmen oder ein Halten insbesondere mit der Möglichkeit eines Nachfliessens der Schichten 1, 2 oder eine Kombination dieser Funktionen beinhalten.

Außerdem kann nachfolgend ein Bearbeiten der Schichten und insbesondere das Beschneiden der Außenbereiche der Schichten unabhängig voneinander erfolgen. Je nach Anwendungsfall kann insbesondere durch eine spezielle Beschichtung vorgesehen sein, dass ein Anlagebereich oder mehrere Anlagebereiche das Nachfliessen einer oder beider der Schichten 1, 2 hemmt bzw. hemmen. Die einander zugewandten Anlagebereiche 22a, 23a müssen nicht zwingend zueinander parallel verlaufen. Die Anlagebereiche 22a, 23a können bereichsweise oder über die vollständige Fläche beschichtet oder mit entsprechenden Einsätzen versehen sein, um je nach Erfordernis ein Nachfließen der zwischen den zwei Spannrahmen-Elementen 22, 23 gehaltenen Schicht 1 bzw. 2 erleichtert oder erschwert wird. Um ein Nachfließen einer Schicht 1 bzw. 2 zu erleichtern, können die jeweiligen Anlagebereiche oder auf dieser angeordnete Segmente z.B. PolytetrafluorEthylen (PTFE) - Bestandteile enthalten oder eine verhältnismäßig geringe Rauhtiefe aufweisen. Dazu können die jeweiligen Anlagebereiche oder auf dieser angeordnete Segmente auch eine metallische Beschichtung besitzen, die z.B. galvanisch aufgebracht wird. Um ein Nachfließen eine Schicht 1 bzw. 2 zu erschweren, können die jeweiligen Anlagebereiche reibungserhöhende Bestandteile oder Segmente enthalten. Hierzu kann auch eine geeignete Oberflächenstruktur vorgesehen sein.

Die jeweiligen zum Aufnehmen einer Schicht 1 bzw. 2 vorgesehenen Anlagebereiche 22a, 23a oder auf dieser angeordnete Segmente und/oder die Werkzeugteile 11 bzw. 12 können ganz oder bereichsweise mittels einer Temperierungs-Einrichtung temperierbar ausgeführt werden. Dabei können sämtliche Anlagebereiche 22a, 23a oder ein einzelner Anlagebereich oder nur zwei einander zugewandte Anlagebereiche oder auch nur ein Werkzeugteil 11 oder 12 ganz oder bereichsweise temperierbar sein. Die hierfür anordbare Temperierungs-Einrichtung ist derart gestaltet, dass mit dieser eine Temperatur des Anlagebereichs bzw. des Segments konstant oder Zeit- oder Prozess-abhängig einstellbar oder regelbar ist. Die Einstellung kann durch eine Steuerung auch mit Hilfe von Temperatur-Sensoren in dem jeweils zu temperierenden Anlagebereich bzw. Segment realisiert sein. Die alternative Regelung erfolgt auf der Basis der mittels Temperatur-Sensoren erfassten Temperaturen an dem jeweils zu temperierenden Anlagebereich bzw. Segment.

Durch die Temperierung zumindest eines Anlagebereichs bzw. Segments kann das Spiel von Führungen oder Passungen oder die Beabstandung beweglicher Teile optimiert und insbesondere verringert werden, da die Ausdehnungen beweglicher Teile bedingt durch die Temperatur-Veränderungen in vorbestimmten Grenzen einstellbar sind. Auf diese Weise kann die Werkzeug-Genauigkeit, die Betriebssicherheit und Zuverlässigkeit der Herstellungs-Vorrichtung verbessert werden.

Ein weiterer durch die Temperierung zumindest von Bereichen der Anlageflächen bzw. Segmente bzw. zumindest eines Spannrahmen-Elements der Spannrahmen-Einrichtung bzw. eines oder mehrerer der Formwerkzeuge 10 erreichbarer Vorteil leigt darin, dass die Bildung von kondensiertem Wasser auf einer unterkühlten Werkzeug- oder Spannrahmen-Oberfläche verhindert werden kann. Auf diese Weise wird weiterhin verhindert, dass eine Abkühlung der Schichten erfolgt, durch die Verformbarkeit und Verbindbarkeit der Schichten miteinander erschwert und sogar verhindert wird.

Durch die genannte Temperierung ist ein Überhitzen von Bereichen der Anlageflächen bzw. Segmente verhinderbar. Ein derartiges Überhitzen würde insbesondere die Oberflächenstruktur des herzustellenden Bauteils negativ beeinflussen wodurch insbesondere ein gegebenenfalls wünschenswerter Bogel-Effekt wie z.B. eine Anblendung verhindert werden könnte. Deshalb ist es vorteilhaft, bei der Temperierung insbesondere auch durch einen Kühl-Mechanismus eine vorbestimmte Prozess-Temperatur vorzusehen.

Die Temperierung eines oder beider der Werkzeugteile 11, 12, die zusätzlich oder alternativ zur Temperierung von Spannrahmen-Elementen vorgesehen sein kann, kann mittels der vorgenannten Temperierungs-Einrichtung oder mittels einer weiteren Temperierungs-Einrichtung temperierbar sein. Dabei wird jeweils ein Bereich an der Verformungskontur 13 bzw. 14 temperiert, um das für die jeweilige Schicht 1 bzw. 2 verwendete Material in einem vorteilhaft bearbeitbaren Zustand zu bringen oder zu erhalten. Ein weiterer Vorteil ist, dass durch die Temperierung von Teilen der Herstellungs-Vorrichtung eine optimierte Auslegung oder Arbeitsweise derselben erfolgen kann.

Die Werkzeugteile 11, 12 sind mittels einer Werkzeug-Zustelleinrichtung (nicht dargestellt) zueinander zwischen zwei Stellungen beweglich. Auch ist jedes Spannrahmen-Element mittels jeweils einer entsprechend zugeordneten Stell-Einrichtung 31 bzw. 32 selbstständig beweglich. Durch eine mechanische Verbindung der Stell-Einrichtung 31 bzw. 32 mit den Werkzeugen 11, 12 kann die Häufigkeit der erforderlichen Betätigungen der Stell-Einrichtungen verringert werden, da diese von der Presse teilweise übenommen werden kann. Die Stellungen, zwischen denen die Spannrahmen-Elemente beweglich sind, sowie die Stellungen, zwischen denen gleichzeitig die Werkzeugteile beweglich sind, sind derart vorgesehen, dass ein Einlegen der ersten und der zweiten Schicht 1, 2 zwischen die auseinander gefahrenen Werkzeugteile sowie ein Verformen und Anpressen der Schichten möglich ist, während gleichzeitig die außerhalb der Verformungskonturen 13, 14 gelegenen Überstand- oder Randbereiche der Schichten 1, 2 auf eine Weise festgehalten werden, dass im Verlauf des Zusammenfahrens der Werkzeugteile 11, 12 zeitweise ein Nachfliessen einer oder beider der Schichten ermöglicht wird.

Erfindungsgemäß ist hierzu zumindest an einem der Spannrahmen-Elemente 21, 22 mindestens ein Distanz-Element 41, 42 zur Beabstandung der Spannrahmen-Elemente 21, 22 in der Schließ-Stellung derselben geordnet. Dadurch wird in der Schließ-Stellung der Spannrahmen-Elemente 22, 23 und bei einem mittels der Werkzeugteile 11, 12 ausgeübten Press-Vorgang ein Nachfliessen zumindest eines der eingelegten Material-Schichten 1, 2 zugelassen.

Die Ausfahrstellungen der Zustelleinrichtungen für die Werkzeugteile oder die Spannrahmen-Elemente können miteinander gekoppelt sein. Alternativ kann eine teilweise oder vollständige Unabhängigkeit der Ausfahrstellungen realisiert sein, z.B. indem die Zustelleinrichtung für das Werkzeug und die Zustelleinrichtung für ein diesem zugeordneten Spannrahmen-Element mechanisch voneinander unabhängig angeordnet oder montiert sind.

Die im Herstellungsverfahren benötigten Stellungen der Zustelleinrichtungen und somit die Einfahr- und Ausfahrstellungen der Werkzeugteile 11, 12 und der Spannrahmen-Elemente können mittels Sensoren und einem Vergleich der jeweiligen Soll- und Ist-Position in einer entsprechenden Steuerungs-Einrichtung erreicht werden. Dabei kann vorgesehen sein, dass die Sensoren die Position eines entsprechenden Betätigungselements in der jeweiligen Zustelleinrichtung oder die Position des jeweiligen Spannrahmen-Elements bzw. Werkzeugteils selbst erfassen.

Alternativ können die vorgesehenen Einfahr- und Ausfahrstellungen der Spannrahmen-Elemente über mechanische Begrenzungs-Elemente erreicht werden. In einer speziellen Ausführungsform braucht jede Stell-Einrichtung gesteuert über eine zugeordnete Steuerungs-Einrichtung nur in einer vorbestimmten Reihenfolge zwischen zwei Endstellungen hin- und hergefahren zu werden, um die für das erfindungsgemäße Herstellungsverfahren bestimmungsgemäße Funktion zu erfüllen. Durch die Einsparung von Sensoren und einer Steuerung auf der Basis eines Soll-Ist-Vergleichs für die jeweiligen Ausfahrstellung jeder Zustelleinrichtung ist diese Ausführungsform der Herstellungs-Vorrichtung kostengünstig.

Hierfür können zwei Abstandhalter 51, 52 mit den Werkzeugteilen 11 bzw. 12 in Verbindung stehen, im Pressverform-Werkzeug integriert sein. Mit diesen kann die Press-Stellung der Werkzeugtelle 11, 12 festlegbar sein. Diese Abstandhalter 51, 52 können auch entfallen.

Bei einer Ausgestaltung der Abstandhalter als höhenveränderliche Abstandhalter sind diese über einen Stellantrieb ausfahrbar, der mit der Steuerungs-Einrichtung funktional verbunden ist, um die phasenweise erforderliche Beabstandung der jeweils zusammenwirkenden Spannrahmen-Elemente durch eine entsprechende momentane Ausfahrstellung des jeweiligen Abstandhalters zu bewirken. Neben einer solchen elektronisch gesteuerten Verstellung der Abstandhalter können diese alternativ auch hydraulisch oder über eine Steuerkurve gesteuert werden. Eine solche Steuerkurve für die Spannrahmen-Elemente berücksichtigt vorzugsweise die jeweiligen Stellungen der Werkzeugteile.

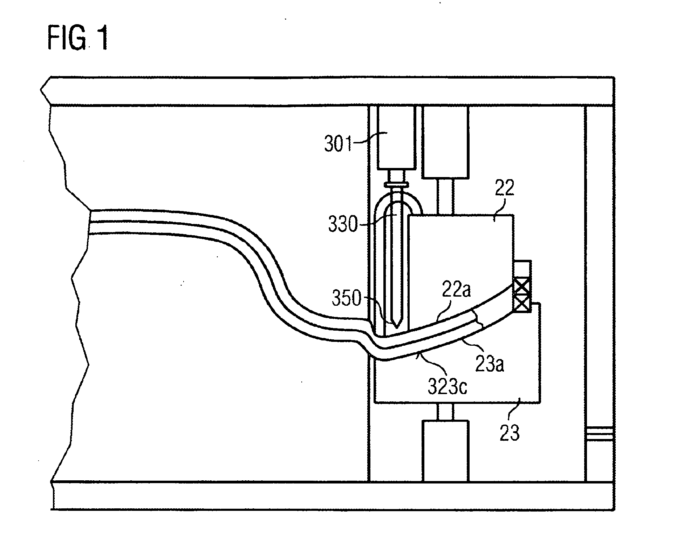

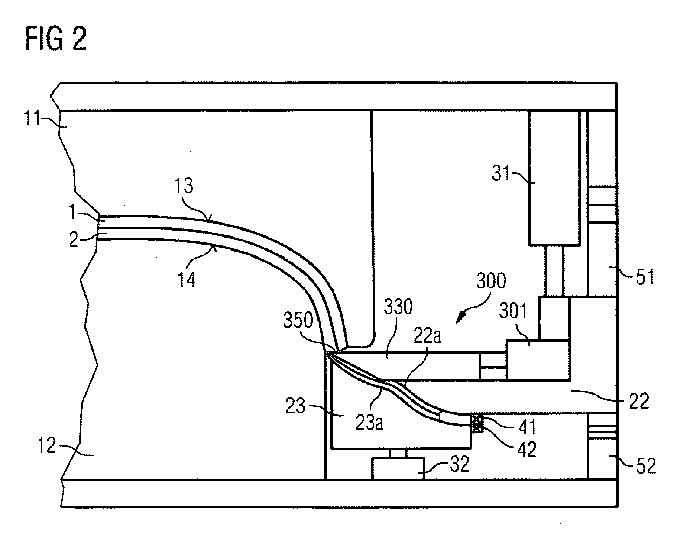

In der dargestellten Ausführungsform des erfindungsgemäßen Presswerkzeuges ist jeweils ein Distanzierungs-Element 41, 42 an jedem Spannrahmen-Element 21, 22 angeordnet. Gernell ist zumindest an einem der Spannrahmen-Elemente 21, 22 mindestens ein Distanz-Element 41, 42 angeordnet. Alternativ kann an jedem der Spannrahmen-Elemente 41, 22 jeweils ein Distanz-Element angeordnet sein, die in der Schließ-Stellung gegenseitig zur Anlage kommen (Figuren 1 und 2). Es können auch mehrere Distanz-Elemente an jedem der Spannrahmen-Elemente 41, 22 angeordnet sein.

Ein Distanzierungs-Element 41, 42 kann als starres oder in Richtung der Bewegungen oder entsprechenden Relativbewegungen der Spannrahmen-Elemente höhen- oder längenveränderliches und einstellbares Distanzierungs-Element ausgeführt sein. Auch kann die Einstellung des zumindest einen Distanz-Elements mechanisch oder über eine Steuerungs-Einrichtung erfolgen. Bei der Verwendung eines in Bezug auf die Bewegungen der Spannrahmen-Elemente fixierten, also nicht höhenveränderlichen Distanzierungs-Elementes wird durch das Zusammenfahren der jeweiligen Spannrahmen-Elemente zwischen diesen ein während des Herstellungsverfahrens in Bezug auf die Material-Schichten 1, 2 definierter Abstand erreicht. Bei der Verwendung höhenveränderlicher Distanzierungs-Elemente werden die durch diese definierten Endstellungen der Spannrahmen-Elemente ist das Nachfließ- und Klemm-Verhalten der Spannrahmen-Elemente in bezug auf die jeweils aufgenommenen Schichten 1, 2 veränderbar. Dadurch wird erreicht, dass in jeder Stellung der Werkzeugteile ein Nachfließen der von den Spannrahmen-Elementen aufgenommenen Schichten 1 bzw. 2, soweit dies durch die von den Werkzeugteilen 11, 12 bereitgestellte Verformungskontur benötigt wird, gewährleistet ist, um das Bauteil in der vorgesehenen Gestalt, Dicke, Festigkeit faltenfrei herzustellen.

Die Werkzeugteile 11, 12 sind über eine Werkzeug-Zwischenstellung in eine Schließ-Stellung oder Preß-Stellung oder Kaschier-Stellung (Figuren 1 und 2) bewegbar.

Erfindungsgemäß ist eine Schneid-Einrichtung 300 mit einem Messer oder Schnittmesser 330 vorgesehen, das von einer Zustell-Einrichtung 301 bewegbar ist und gegebenenfalls von einer Mechanik mit einer Führung geführt wird, um die erste Material-Schicht 1 und optional auch die zweite Material-Schicht 2 zu beschneiden.

Die Zustell-Einrichtung der Schneid-Einrichtung 300 und die Mechanik mit der Führung sind derart gestaltet, dass die Schneid-Bewegung des Messers 330 parallel (Figur 2) oder vertikal oder einem anderen Winkel, d.h. allgemein quer (Figur 1) zur Stellbewegung der Werkzeugteile verläuft. Der Winkel der Schneid-Bewegung steht in einem funktionalen Zusammenhang mit dem Verlauf der dem Messer 330 zugewandten Oberfläche der jeweils zu schneidenden Material-Schicht oder der zu schneidenden Material-Schichten.

Die Oberfläche der für den Schneidvorgang wirksamen Kontur der Schneide 335 des Messers 330 ist vorzugsweise 90° zuzüglich oder abzüglich eines Winkelbereichs relativ zur dem Messer zugewandten Oberfläche der zu schneidenden Material-Schicht gerichtet. Der Winkelbereich für die Ausrichtung der Schneide hängt von der an den Material-Schichten zu bildenden Kante und der Art und Zusammensetzung der zu schneidenden Materialien ab.

Die Schneidkante 350 des Schnittmessers 330 kann insbesondere als eine konturgebundene Schneidfläche, also als dreidimensionale Schneidfläche gestaltet sein. Das Schnittmesser 330 kann als ein die Werkzeugteile 11, 12 bereichsweise oder segmentweise umgebendes Messer gebildet sein. Das Messer 330 kann auch als umlaufendes Messer sein. Dabei kann das Messer einteilig umlaufend gebildet oder segmentiert aufgebaut sein. Bei einer einteilig umlaufenden Gestalt des Messers verläuft die Zustellbewegung für das Messer vorzugsweise in Schließ- oder Öffnungs-Richtung der Werkzeugteile 11, 12. Bei einer Schnittbewegung des Messers winklig zur Schließ- oder öffnungs-Richtung der Werkzeugteile 11, 12 ist das Messer 330 aus geometrischen Gründen am Umfang der Werkzeugteile 11, 12 bereichsweise oder segmentiert vorzusehen.

Das Schnittmesser 330 kann sowohl als thermisches oder mechanisches Messer ausgeführt sein. In der Ausführung als thermisches Messer kann dieses z.B. über einen Widerstand beheizbar sein. Durch die Beheizung des Messers kann eine Versiegelungs-Funktion insbesondere bei Temperatur-empfindlichen Material-Schichten erfüllt werden.

Die in der Figur 1 dargestellte Ausführungsform einer Schneid-Einrichtung 300 weist ein in Stellbewegung der Werkzeugteile bewegliches Messer, das z.B. ein thermisches Messer oder ein Schnittmesser 330 sein kann, auf. Bei dieser Schneid-Einrichtung ist das Messer innerhalb einer Nut oder Aussparung beweglich angeordnet, die in der Stellrichtung der Werkzeugteile im ersten Spannrahmen-Element 21 verläuft. Als Gegenlage für die aufzubringende Schneidkraft dient der Anlagebereich 23a des zweiten Spannrahmen-Elements 23.

Altlernativ kann die Schneid-Einrichtung 300 auch am oder im zweiten Spannrahmen-Element 22 angeordnet sein. Auch kann sowohl im ersten als auch im zweiten Spannrahmen-Element eine Schneid-Einrichtung 300 angeordnet sein. Dabei dient als Gegenlage der Anlagebereich des jeweils gegenüber liegenden Spannrahmen-Elements. Die Position der Messer kann in deren Schneidrichtung gesehen übereinander oder versetzt zueinander gelegen sein.

Die Figur 1 zeigt die Schneid-Einrichtung 300 in seiner Ausgangsstellung, während die Figur 2 den Zustand einer alternativen Schneid-Einrichtung nach dem Ausführen der Schneid-Bewegung zeigt.

Es kann vorgesehen sein, dass die Ausführungsformen der erfindungsmäßen Schneid-Einrichtung dazu vorgesehen ist, nur eine Schicht, und zwar die nächstgelegene Material-Schicht oder mehrere oder sämtliche Material-Schichten zu durchtrennen.

Die in der Figur 2 dargestellte Schneid-Einrichtung 300 weist ein Messer 330 auf, das in einem Winkel quer zu Stell- oder Schließ-Bewegung der Werkzeugteile 11, 12 betätigt werden kann. In dieser Ausführungsform dient als Gegenlage für die aufzubringende Schneidkraft ein entsprechender Bereich des Pressverform-Werkzeuges, wobei dieser in der gezeigten Ausführungsform Teil des zweiten Werkzeugteils 12 ist. Die Schneid-Einrichtung oder das Messer ist bei der dargestellten Ausführungsform auf derjenigen Seite des ersten Spannahmen-Elements 22 angeordnet, das dem zweiten Spannahmen-Element 22 gegenüber liegt.

Alternativ kann das Messer zwischen dem ersten Spannahmen-Element 22 und dem zweiten Spannrahmen-Element 23 angeordnet sein.

Das Schneid-Verfahren mittels der Schneid-Einrichtung 300 ist wie folgt:
Aufgrund der Betätigung eines entsprechenden Stellantriebs des Messers 330 wird dieses auf einen entsprechenden Bereich des der Schnittkante des Messers zugewandten Gegenlage zubewegt. Der Überstand zumindest einer der jeweils dem Msser zugewandten Material-Schicht wird dann durch den aufgrund der Zustellbewegung des Messers 330 aufgebrachten Druck oder der Temperatur abgeschnitten.

Verfahren zur Herstellung eines Bauteils durch Press-Verformung einer ersten und einer zweiten Material-Schicht, bei der eine Verbindung der beiden Schichten innerhalb der Verformungskonturen 13, 14 zweier Werkzeugteile 11, 12 durch deren Zusammenfahren erfolgt, wobei in einer Ausgangsstellung das erste 11 und das zweite 12 Werkzeugteil auseinander gefahren ist, mit den folgenden Schritten:
(a) aus der Ausgangsstellung Fahren des ersten Spannrahmen-Elements 22 und des zweiten Spannrahmen-Elements 23 in eine zueinander ausgefahrene Stellung und Einlegen der zumindest zwei Material-Schichten 1, 2 zwischen die beiden Werkzeugteile 11, 12, wobei das erste und das zweite Spannrahmen-Element außerhalb der Verformungskonturen 13, 14 der Werkzeugteile angeordnet ist,
(b) Zusammenfahren des ersten 21 und des zweiten 23 Spannrahmen-Elements in eine Stellung, bis diese von zumindest einem an zumindest einem der Spannrahmen-Elemente angeordneten Distanz-Element beabstandet werden, so dass die erste 1 und die zweite 2 Material-Schicht durch das erste 21 und das zweite 23 Spannrahmen-Element bei einem vorbestimmten Abstand der einander zugewandten Flächen der Spannrahmen-Elemente gehalten werden, so dass in der Schless-Stellung der Spennrahmen-Elemente und bei einen mittels der Werkzeugteile ausgeübten Press-Vorgang ein Nachfliessen zumindest eines der eingelegten Material-Schichten zugelassen ist,
(c) Zusammenfahren der Werkzeugteile relativ zueinander und Durchführung der Pressverformung im Bereich der Verformungskonturen 13, 14 der Werkzeugteile 11, 12,
(d) Abschneiden eines zwischen dem ersten und dem zweiten Werkzeugteil vorhandenen Überstands zumindest einer der beiden Material-Schichten mittels eines Messers 330 einer Schneid-Einrichtung 100, wobei das Messer beim Schneid-Vorgang derart bewegt wird, dass ein entsprechender Bereich des der Schneid-Kante 350 des Messers 330 zugewandter Anlagebereich 23a des zweiten Spannrahmen-Elements 22, 23 als Gegenlage 323c für die Schneid-Kante 350 beim Schneiden wirkt.
(e) Auseinanderfahren der Werkzeugteile 11, 12 und der Spannrahmen-Elemente 22, 23, um die miteinander pressverformten und verbundenen Material-Schichten 1, 2 dem Werkzeug entnehmen zu können. Vor dem Einlegen der Schichten 1, 2 zwischen die Werkzeugteile kann ein Erwärmen der ersten oder der zweiten Schicht erfolgen.

## Patentansprüche

1. Pressverform-Werkzeug zur Herstellung eines Bauteils aus zumindest einer ersten Material-Schicht (1) und einer zweiten Material-Schicht (2) mit zumindest einem ersten Werkzeugteil (11) und einem zweiten Werkzeugteil (12) mit jeweils einer dreidimensionalen Verformungskontur, wobei bei einem Einlegen der ersten Material-Schicht (1) und der zweiten Material-Schicht (2) in die Vorrichtung die Verformungskontur des ersten Werkzeugteils (11) der ersten Material-Schicht und die Verformungskontur des zweiten Werkzeugteils (12) der zweiten Material-Schicht zugewandt ist, wobei die Werkzeugteile (11, 12) in einem Druck-Geber eingespannt sind, um die Verformung der ersten Material-Schicht (1) und der zweiten Material-Schicht (2) sowie die Verbindung der beiden Material-Schichten miteinander durch das Zusammenfahren des ersten und des zweiten Werkzeugteils zu bewirken, sowie mit einer Spannrahmen-Einrichtung, um die Material-Schichten während des Verformungsvorganges außerhalb des Konturbereichs des Werkzeugs in ihrer Schließ-Stellung zu halten,
wobei das Pressverform-Werkzeug eine Schneid-Einrichtung (300) mit einem in der in der Öffnungs- und Schließ-Richtung gesehen segmentweise am Umfang der die Werkzeugteile (11, 12) verlaufenden oder diese vollständig umlaufenden Messer (330) zum Abschneiden eines bei der Pressverformung neben dem ersten und dem zweiten Werkzeugteil vorhandenen Überstandes der Material-Schichten (1, 2) umfasst, das relativ zu einem ersten oder zweiten Spannrahmen-Element (22, 23) beweglich ist,
**dadurch gekennzeichnet,**
**dass** die Spannrahmen-Einrichtung das erste Spannrahmen-Element (22), das mittels einer ersten Stell-Einrichtung (31) relativ zum ersten Werkzeugteil beweglich ist, und das zweite Spannrahmen-Element (23), das mittels einer zweiten Stell-Einrichtung (32) relativ zum zweiten Werkzeugteil bewegbar ist, aufweist, wobei die Spannrahmen-Elemente (22, 23) zum Halten der zumindest zwei Material-Schichten angeordnet sind und wobei zumindest an einem der Spannrahmen-Elemente (22, 23) mindestens ein Distanz-Element zur Beabstandung der Spannrahmen-Elemente (22, 23) in der Schließ-Stellung derselben angeordnet ist, so dass in der Schließ-Stellung der Spannrahmen-Elemente (22, 23) und bei einem mittels der Werkzeugteile (11, 12) ausgeübten Press-Vorgang ein Nachfliessen zumindest eines der eingelegten Material-Schichten (1, 2) zugelassen ist.

2. Pressverform-Werkzeug nach dem Patentanspruch 1, **dadurch gekennzeichnet, dass** zumindest ein Distanz-Element einstellbar ausgeführt ist.

3. Pressverform-Werkzeug nach dem Patentanspruch 2, **dadurch gekennzeichnet, dass** die Einstellung zumindest eines Distanz-Elements mechanisch oder über eine Steuerungs-Einrichtung erfolgt.

4. Pressverform-Werkzeug nach einem der voranstehenden Patentansprüche, **dadurch gekennzeichnet, dass** an jedem der Spannrahmen-Elemente (22, 23) jeweils ein Distanz-Element angeordnet ist, die in der Schließ-Stellung gegenseitig zur Anlage kommen.

5. Pressverform-Werkzeug nach einem der voranstehenden Patentansprüche, **dadurch gekennzeichnet, dass** die Schneid-Bewegung des Messers (330) der Schneid-Einrichtung (300) parallel zur Stellbewegung der Werkzeugteile (11, 12) verläuft.

6. Pressverform-Werkzeug nach einem der voranstehenden Patentansprüche 1 bis 4, **dadurch gekennzeichnet, dass** die Schneid-Bewegung des Messers (330) der Schneid-Einrichtung (300) quer zur Stellbewegung der Werkzeugteile (11, 12) verläuft.

7. Pressverform-Werkzeug nach einem der voranstehenden Patentansprüche, **dadurch gekennzeichnet, dass** das Messer der Schneid-Einrichtung (300) mittels einer Heiz-Einrichtung beheizbar ist.

8. Pressverform-Werkzeug nach dem voranstehenden Patentanspruch 7, **dadurch gekennzeichnet, dass** die Heiz-Einrichtung des Messers eine Aufnahme für zumindest eine in diese einsetzbare Heizpatrone aufweist.

9. Pressverform-Werkzeug nach dem voranstehenden Patentanspruch 7, **dadurch gekennzeichnet, dass** die Heiz-Einrichtung des Messers eine elektrische Widerstands-Heizung aufweist.

10. Pressverform-Werkzeug nach einem der voranstehenden Patentansprüche, **dadurch gekennzeichnet, dass** die Schneid-Einrichtung (300) derart ausgeführt ist, dass in der Schließ-Stellung der Spannrahmen-Elemente (22, 23) das Messer (330) derart positionierbar ist, dass dieses in seiner Ausgangsstellung die in den Spannrahmen eingelegten Material-Schichten (1, 2) nicht berührt.

11. Pressverform-Werkzeug nach einem der voranstehenden Patentansprüche, **dadurch gekennzeichnet, dass** die Beweglichkeit des Messers durch einen elektrischen, hydraulischen oder pneumatischen Antrieb bewerkstelligt ist.

12. Pressverform-Werkzeug nach einem der voranstehenden Patentansprüche, **dadurch gekennzeichnet, dass** Beweglichkeit des Messers durch eine manuelle Betätigungs-Einrichtung bewerkstelligt ist

13. Pressverform-Werkzeug nach einem der voranstehenden Patentansprüche, **dadurch gekennzeichnet, dass** das Messer in seiner Schneid-Stellung das erste Spannrahmen-Element zumindest teilweise durchragt.

14. Pressverform-Werkzeug nach einem der voranstehenden Patentansprüche, **dadurch gekennzeichnet, dass** zumindest einem der beiden Spannrahmen (22, 23) eine Einrichtung zur Temperierung des Spannrahmens zugeordnet ist.

15. Verfahren zur Herstellung eines Bauteils durch Press-Verformung einer ersten und einer zweiten Material-Schicht, bei der eine Verbindung der beiden Schichten innerhalb der Verformungskonturen (13, 14) zweier Werkzeugteile (11, 12) durch deren Zusammenfahren erfolgt, wobei in einer Ausgangsstellung das erste (11) und das zweite (12) Werkzeugteil auseinander gefahren ist,
mit den folgenden Schritten:
a) aus der Ausgangsstellung Fahren eines ersten Spannrahmen-Elements (22) und eines zweiten Spannrahmen-Elements (23) in eine zueinander ausgefahrene Stellung und Einlegen der zumindest zwei Material-Schichten (1, 2) zwischen die beiden Werkzeugteile (11, 12), wobei das erste und das zweite Spannrahmen-Element außerhalb der Verformungskonturen (13, 14) der Werkzeugteile angeordnet ist,
b) Zusammenfahren des ersten (22) und des zweiten (23) Spannrahmen-Elements in eine Stellung, bis diese von zumindest einem an zumindest einem der Spannrahmen-Elemente angeordneten Distanz-Element beabstandet werden, so dass die erste (1) und die zweite (2) Material-Schicht durch das erste (22) und das zweite (23) Spannrahmen-Element bei einem vorbestimmten Abstand der einander zugewandten Flächen der Spannrahmen-Elemente gehalten werden, so dass in der Schliess-Stellung der Spannrahmen-Elemente und bei einem mittels der Werkzeugteile ausgeübten Press-Vorgang ein Nachfliessen zumindest eines der eingelegten Material-Schichten zugelassen ist,
c) Zusammenfahren der Werkzeugteile relativ zueinander und Durchführung der Pressverformung im Bereich der Verformungskonturen (13, 14) der Werkzeugteile (11, 12),
d) Abschneiden eines zwischen dem ersten und dem zweiten Werkzeugteil vorhandenen Überstands zumindest einer der beiden Material-Schichten mittels eines Messers (330) einer Schneid-Einrichtung (100), wobei das Messer beim Schneid-Vorgang derart bewegt wird, dass ein entsprechender Bereich des der Schneid-Kante (350) des Messers (330) zugewandten Anlagebereichs (23a) des zweiten Spannrahmen-Elements (23) oder eines der Werkzeugteile (11, 12) als Gegenlage (323c) für die Schneid-Kante (350) beim Schneiden wirkt,
e) Auseinanderfahren der Werkzeugteile (11, 12) und der Spannrahmen-Elemente (22, 23), um die miteinander pressverformten und verbundenen Material-Schichten (1, 2) dem Werkzeug entnehmen zu können.

## Claims

1. A press forming tool for producing a component from at least one first material layer (1) and a second material layer (2) comprising at least one first tool part (11) and a second tool part (12) with respectively one three-dimensional deformation contour,
wherein when the first material layer (1) and the second material layer (2) are inserted into the device, the deformation contour of the first tool part (11) is facing the first material layer and the deformation contour of the second tool part (12) is facing the second material layer, wherein the tool parts (11, 12) are clamped in a pressure transducer in order to effect the deformation of the first material layer (1) and the second material layer (2) and the joining of the two material layers to one another by bringing together the first and the second tool part, and comprising a clamping frame device to hold the material layers in their closed position during the deformation process outside the contour region of the tool,
wherein the press forming tool comprises a cutting device (300) with a blade (330) running segment-wise on the circumference of the tool parts (11, 12) or completely encircling said tool parts when viewed in the opening and closing direction for trimming a protrusion of the material layers (1, 2) present adjacent to the first and the second tool part during the press forming, said blade being moveable relative to a first or second clamping frame element (22, 23),
**characterised in**
**that** the clamping frame device comprises the first clamping frame element (22) which is movable by means of a first adjusting device (31) relative to the first tool part and the second clamping frame element (23) which is movable by means of a second adjusting device (32) relative to the second tool part, wherein the clamping frame elements (22, 23) are arranged for holding the at least two material layers and
wherein at least one spacer element for spacing apart the clamping frame elements (22, 23) in the closed position of the same is arranged at least on one of the clamping frame elements (22, 23) so that in the closed position of the clamping frame elements (22, 23) and during a pressing process exerted by means of the tool parts (11, 12), afterflow of at least one of the inserted material layers (1, 2) is allowed.

2. The press forming tool according to claim 1, **characterised in that** at least one spacer element is designed to be adjustable.

3. The press forming tool according to claim 2, **characterised in that** the adjustment of at least one spacer element takes place mechanically or by means of a control device.

4. The press forming tool according to any one of the preceding claims, **characterised in that** respectively one spacer element is arranged on each of the clamping frame elements (22, 23), which come into mutual abutment in the closed position.

5. The press forming tool according to any one of the preceding claims, **characterised in that** the cutting movement of the blade (330) of the cutting device (300) runs parallel to the adjusting movement of the tool parts (11, 12).

6. The press forming tool according to any one of the preceding claims 1 to 4, **characterised in that** the cutting movement of the blade (330) of the cutting device (300) runs transversely to the adjusting movement of the tool parts (11, 12).

7. The press forming tool according to any one of the preceding claims, **characterised in that** the blade of the cutting device (300) can be heated by means of a heating device.

8. The press forming tool according to the preceding claim 7, **characterised in that** the heating device of the blade has a receptacle for at least one heating cartridge which can be inserted therein.

9. The press forming tool according to the preceding claim 7, **characterised in that** the heating device of the blade comprises an electrical resistance heater.

10. The press forming tool according to any one of the preceding claims, **characterised in that** the cutting device (300) is designed in such a manner that in the closed position of the clamping frame element (22, 23) the blade (330) can be positioned in such a manner that in its initial position, it does not touch the material layers (1, 2) inserted in the clamping frame.

11. The press forming tool according to any one of the preceding claims, **characterised in that** the mobility of the blade is accomplished by an electric, hydraulic or pneumatic drive.

12. The press forming tool according to any one of the preceding claims, **characterised in that** the mobility of the blade is accomplished by a manual actuating device.

13. The press forming tool according to any one of the preceding claims, **characterised in that** in its cutting position, the blade penetrates at least partly through the first clamping frame element.

14. The press forming tool according to any one of the preceding claims, **characterised in that** at least one of the two clamping frames (22, 23) is assigned a device for tempering the clamping frame.

15. A method for producing a component by press forming of a first and a second material layer wherein a joining of the two layers within the deformation contours (13, 14) of the two tool parts (11, 12) is effected by bringing these together, wherein in an initial position the first (11) and the second (12) tool part are driven apart from one another,
comprising the following steps:
a) from the initial position driving a first clamping frame element (22) and a second clamping frame element (23) into a position apart from one another and inserting the at least two material layers (1, 2) between the two tool parts (11, 12), wherein the first and the second clamping frame element are arranged outside the deformation contours (13, 14) of the tool part,
b) bringing together the first (22) and the second (23) clamping frame element into a position until these are spaced apart from at least one spacer element arranged on at least one of the clamping frame elements, so that the first (1) and the second (2) material layer are held by the first (22) and the second (23) clamping frame element with a predetermined distance between facing faces of the clamping frame elements so that in the closed position of the clamping frame elements and during a pressing process exerted by means of the tool parts, afterflow of at least one of the inserted material layers is allowed,
c) bringing together the tool parts relative to one another and carrying out the press forming in the area of the deformation contours (13, 14) of the tool parts (11, 12),
d) trimming a protrusion of at least one of the two material layers present between the first and the second tool part by means of a blade (330) of a cutting device (100, wherein the blade is moved during the cutting process in such a manner that a corresponding region of the contact region (23a) of the second clamping frame element (23) facing the cutting edge (350) of the blade (330) or of one of the tool parts (11, 12) acts as a counterlayer (323c) for the cutting edge (350) during cutting,
e) moving apart the tool parts (11, 12) and the clamping frame elements (22, 23) so that the material layers (1, 2) which have been press-formed and joined together can be removed from the tool.

## Revendications

1. Outil de moulage par compression pour la fabrication d'un composant constitué d'au moins une première couche de matériau (1) et une deuxième couche de matériau (2), comportant au moins une première partie d'outil (11) et une deuxième partie d'outil (12) ayant respectivement un contour de moulage en trois dimensions, dans lequel lors d'une application de la première couche de matériau (1) et de la deuxième couche de matériau (2) dans le dispositif, le contour de moulage de la première partie d'outil (11) est tourné vers la première couche de matériau et le contour de moulage de la deuxième partie d'outil (12) est tourné vers la deuxième couche de matériau, dans lequel les parties d'outil (11,12) sont maintenues par bridage dans un pressuriseur, afin de provoquer le moulage de la première couche de matériau (1) et de la deuxième couche de matériau (2) ainsi que la liaison des deux couches de matériau l'une à l'uatre en déplaçant conjointement la première et la deuxième partie d'outil, ainsi qu'un dispositif de cadre de serrage, afin de maintenir les couches de matériau pendant le processus de moulage à l'extérieur de la zone de contour de l'outil dans sa position de fermeture,
dans lequel l'outil de moulage par compression comprend un dispositif de découpage (300) avec une lame (330) s'étendant par segments sur la périphérie des parties d'outil (11,12) ou faisant complètement le tour de celles-ci, vu dans la direction d'ouverture et de fermeture, afin de découper un débord des couches de matériau (1,2) présent à côté de la première et la deuxième partie d'outil lors du processus de moulage, qui est mobile relativement à un premier ou un deuxième élément de cadre de serrage (22,23),
**caractérisé en ce que**,
le dispositif de cadre de serrage comprend le premier élément de cadre de serrage (22), qui est déplaçable au moyen d'un premier dispositif de manoeuvre (31) relativement à la première partie d'outil, et le deuxième élément de cadre de serrage (23), qui est déplaçable au moyen du deuxième dispositif de manoeuvre (32) relativement à la deuxième partie d'outil, dans leqel les éléments de cadre de serrage (22,23) sont disposés de manière à maintenir au moins deux couches de matériau et dans lequel au moins un élément d'écarteur pour espacer les éléments de cadre de serrage (22,23) dans la position de fermeture de ceux-ci est disposé sur un des éléments de cadre de serrage (22,23), de telle sorte que, dans la position de fermeture des éléments de cadre de serrage (22,23) et dans le cadre d'un processus de compression exercé au moyen des parties d'outil (11,12), un écoulement continuel d'au moins une des couches de matériau (1,2) appliquées soit autorisé .

2. Outil de moulage par compression selon la revendication 1, **caractérisé en ce que** au moins un élément d'écarteur est réalisé de manière réglable.

3. Outil de moulage par compression selon la revendication 2, **caractérisé en ce que** le réglage d'au moins un élément d'écarteur s'effectue mécaniquement ou via un dispositif de commande.

4. Outil de moulage par compression selon une des revendications précédentes, caractérsié en ce que sur chacun des éléments de cadre de serrage (22,23), un élément d'écarteur respectif est disposé, lesquels viennent mutuellement en appui dans la position de fermeture.

5. Outil de moulage par compression selon une des revendications précédentes, **caractérisé en ce que** le mouvement de découpage de la lame (330) du dispositif de découpage (300) s'étend parallèlement au mouvement de manoeuve des parties d'outil (11,12).

6. Outil de moulage par compression selon une des revendications 1 à 4 précédentes, **caractérisé en ce que** le mouvement de déocupage de la lame (330) du dispositif de découpage (300) s'étend transversalement au mouvement de manoeuvre des parties d'outil (11,12).

7. Outil de moulage par compression selon une des revendications précédentes, **caractérisé en ce que** la lame du dispositif de découpage (300) peut être chauffée au moyen d'un dispositif de chauffage.

8. Outil de moulage par compression selon la revendication 7 précédente, **caractérisé en ce que** le dispositif de chauffage de la lame présente un réceptacle destiné à au moins une cartouche chauffante pouvant être placée dans celui-ci.

9. Outil de moulage par compression selon la revendication 7 précédente, **caractérisé en ce que** le dispositif de chauffage de la lame présente un chauffage à résistance électrique.

10. Outil de moulage apr comrpession selon une des revendications précédentes, **caractérisé en ce que** le dispositif de découpage (300) est réalisé de telle sote que, dans la position de fermeture des éléments de cadre de serrage (22,23), la lame puisse être positionnée de telle sorte que celle-ci ne contacte pas en sa position de sortie les couches de matériau (1,2) appliquées dans le cadre de serrage.

11. Outil de moulage par compression selon une des revendications précédentes, **caractérisé en ce que** la mobilité de la lame est exécutée par un entraînement électrique, hydraulique ou pneumatique.

12. Outil de moulage par compression selon une des revendications précédentes, **caractérisé en ce que** la mobilité de la lame est exécutée par un dispositif d'actionnement manuel.

13. Outil de moulage par compression selon une des revendications précédentes, **caractérisé en ce que** la lame dépasse en sa position de découpage au moins partiellement à travers le premier élément de cadre de serrage.

14. Outil de moulage par compression selon une des revendications précédentes, caractérsié en ce que au moins un des deux cadres de serrage (22,23) est coordonné à un dispositif de refroidissement du cadre de serrage.

15. Procédé de fabrication d'un composant par moulage par compression d'une première et d'une deuxième couche de matériau, dans lequel une liaison des deux couches à l'intérieur des contours de moulage (13,14) de deux parties d'outil (11,12) s'effectue en déplaçant conjoinctement celles-ci, moyennant quoi en une position de sortie, la première partie d'outil (11) et la deuxième partie d'outil (12) sont écartées l'une de l'autre,
avec les étapes suivantes consistant à:
a) à partir de la position de sortie, déplacer un premier élément de cadre de serrage (22) et un deuxième élément de cadre de serrage (23) en une position déployée l'un par rapport à l'autre et appliquer au moins les deux couches de matériau (1,2) entre les deux parties d'outil (11,12), moyennant quoi le premier et le deuxième élément de cadre de serrage sont disposés à l'extérieur des contours de moulage (13,14) des parties d'outil,
b) déplacer conjointement le premier élément (22) et le deuxième élément (23) de cadre de serrage en une position, jusqu'à ce que ceux-ci soient espacés par au moins un élément d'écarteur disposé sur au moins un des éléments de cadre de serrage, de telle sorte que la première (1) et la deuxième (2) couche de matériau soient maintenues par le premier élément (22) et le deuxième élément (23) de cadre de serrage à un espacement prédéterminé des surfaces tournées l'une vers l'autre des éléments de cadre de serrage, de telle sorte que, en la position de fermeture des éléments de cadre de serrage et dans le cadre d'un processus de compression exercé au moyen des parties d'outil, un écoulement continuel d'au moins une des couches de matériau appliquées soit autorisé,
c) déplacer conjointement les parties d'outil relativement l'une à l'autre et exécuter le moulage par compression au niveau des contours de moulage (13,14) des parties d'outil (11, 12),
d) découper un débord d'au moins une des deux couches de matériau présent entre la première et la deuxième partie d'outil au moyen d'une lame (330) d'un dispositif de découpage (100), moyennant quoi la lame est déplacée lors du processus de découpage de telle sorte que une zone correspondante de l'arête de découpage (350) de la lame (330) de la zone d'appui (23a) du deuxième élément de cadre de serrage (23) tournée vers l'arête de découpage (350) de la lame ou d'une des parties d'outil (11,12) agit lors du découpage comme butée (323c) pour l'arête de découpage (350),
e) écarter les parties d'outil (11,12) et les éléments de cadre de serrage (22,23) les uns des autres, afin de pouvoir retirer de l'outil les couches de matériau (1,2) moulées par compression et reliées les unes aux autres.
